# EUROPÄISCHE PATENTSCHRIFT

(11) **EP 3 404 907 B1**
(45) Veröffentlichungstag und Bekanntmachung des Hinweises auf die Patenterteilung: **21.10.2020**
(21) Anmeldenummer: 18172534.2
(22) Anmeldetag: 16.05.2018
(51) Int. Cl.: H04M 11/04, H04M 1/725, G08B 13/14

(54) **ANORDNUNG ZUM AUSLÖSEN ZUMINDEST EINER ALARMIERUNG**
ARRANGEMENT FOR TRIGGERING AT LEAST ONE ALERT
DISPOSITIF DE DÉCLENCHEMENT D'AU MOINS UNE ALARME

(30) Priorität: 18.05.2017 DE 102017110838
(43) Veröffentlichungstag der Anmeldung: 21.11.2018
(73) Patentinhaber: Mkrtchian, Mitchell, 26121 Oldenburg (DE); Lüken, Johannes, 26683 Ramsloh (DE)
(72) Erfinder: Lüken, Johannes, 26683 Ramsloh (DE)
(74) Vertreter: Jabbusch, Matthias

(56) Entgegenhaltungen:
- WO-A1-2013/062475
- WO-A1-2017/075323
- DE-A1-102014 007 179
- US-A1- 2005 221 859
- US-A1- 2009 207 013
- US-A1- 2016 110 990

## Beschreibung

Die Erfindung betrifft eine Anordnung zum Auslösen zumindest einer Alarmierung, umfassend zumindest ein mobiles Datengerät mit einer Schnittstelle zum Übertragen von Daten und/oder elektrische Strömen an wenigstens ein anderes Datengerät, und umfassend zumindest ein mit der Schnittstelle verknüpftes Gerät, wobei auf dem Datengerät eine Software gespeichert ist, die einen Zugriff auf von der Schnittstelle bei einem Trennen des Gerätes von der Schnittstelle ausgehende physikalische Signale hat und die mit zumindest einem weiteren Bauteil des Datengerätes verknüpft ist, und umfassend einen zentralen Server.

Mobile Datengeräte der vorgenannten Gattung können beispielsweise Mobiltelefone, tragbare Musikabspielgeräte oder andere sogenannte Handheld-Geräte sein. Diese werden zum Telefonieren, zum Surfen im Internet oder auch für Datenverarbeitungen genutzt, ganz regelmäßig werden derartige mobile Datengeräte aber auch zum Hören von Audiodaten eingesetzt. Bei mobilen Telefonen zudem auch unterwegs, beispielsweise beim Radfahren, beim Joggen oder beim Schlendern durch die Stadt. US 2005/0221859 A1 beschreibt ein elektronisches Modul für Mobiltelefone, das einen Prozessor umfasst, der den Typ eines externen Geräts, z. B. eines an eine Buchse angeschlossenen Headsets, auf der Grundlage der erfassten elektrischen Parameter des Geräts bestimmt. Die Trennung des externen Geräts löst einen akustischen Alarm am Lautsprecher des Mobilgeräts aus. WO 2013/062475 A1 offenbart ein mobiles Gerät für eine Sicherheitsanordnung mit einem Controller, der erkennt, dass ein Stecker aus einer Buchse des Geräts entfernt wird, und eine Sicherheitsanwendung veranlasst, als Reaktion auf das erkannte Entfernen des Steckers einen Alarm auszulösen. DE 10 2014 007 179 A1 beschreibt ein Tablett für ein Mobiltelefon mit einem RFID-Sender, der zur Erkennung der unbefugten Entnahme des Telefons aus dem Tablett verwendet wird. US 2009/0207013 A1 offenbart eine Annäherungsdetektions-Alarmvorrichtung, die z.B. an der Kleidung von Menschen angebracht werden kann und ein Bluetooth-Transceiver-System, einen Alarm-, Steuer-, Regel-, Stromeingangs- und Befestigungsmechanismus umfasst, wobei der Alarm innerhalb einer vorgegebenen Zeit aktiviert wird. WO 2017/075323 A1 beschreibt ein Bluetooth-Armband, das mit einem Smartphone und einem entfernten Server verbunden ist, der Benachrichtigungen von den erkannten Geräten sammelt.

Eine Alarmierung bei einer bedrohlichen Situation kann beispielsweise dann notwendig sein, wenn der Träger eines mobilen Datengerätes Zeuge eines Verkehrsunfalls wird, eine Naturkatastrophe wie beispielsweise eine lokale Überschwemmung feststellt oder auch in seinem persönlichen Umfeld sich durch Annährung dritter Personen bedroht fühlt. Eine Alarmierung kann den das mobile Datengerät Tragenden aus seiner Isolation herauslösen und für ein Hinzuholen von Hilfe sorgen.

Während mit einem Mobiltelefon bei Feststellen einer Gefahr beispielsweise ein Telefonat geführt werden kann, ist in bestimmten Fällen ein derartiges Führen eines Gespräches nicht möglich. Bei einem plötzlichen Überfall beispielsweise erlaubt der Täter nicht das Führen von Telefongesprächen.

Der Erfindung liegt die Aufgabe zugrunde, eine Anordnung der eingangs genannten Gattung aufzuzeigen, mit der auch in bedrängten Situationen eine sichere Alarmierung ermöglicht ist.

Diese Erfindung ist dadurch gelöst, dass ein verknüpftes Bauteil eine drahtlose Sendeeinheit des Datengerätes ist, dass in der drahtlosen Sendeeinheit Informationen über eine Datenverbindung zu dem zentralen Server hinterlegt sind und dass im Server eine Einrichtung zum Vervielfältigen der eingegangenen Daten und zum Senden der vervielfältigten Daten an andere Datengeräte dritter Personen oder Institutionen angeordnet ist.

Das mobile Datengerät kann Daten enthalten und damit auch Programme für die Datenverarbeitung. Bei der erfindungsgemäßen Anordnung ist eine Software auf dem Datengerät lokal gespeichert, welche die Schnittstelle des Datengerätes zum Übertragen von Daten an ein Gerät, z.B. von Audiodaten an zumindest einen Lautsprecher überwacht. Ein derartiges Gerät kann auch ein Ladegerät für das mobile Datengerät sein, wie es beispielsweise in Zügen zum Aufladen des Datengerätes benutzt wird. Die Software überprüft die physikalischen Gegebenheiten dieser Schnittstelle.

Wird z.B. der Lautsprecher von der Schnittstelle getrennt, treten physikalische Signale auf. Diese spezifischen physikalischen Signale werden von der Software festgestellt, dazu greift die Software auf Informationen des Betriebssystems des mobilen Datengerätes zu. Da die Software mit einem weiteren Bauteil des Datengerätes verknüpft ist, kann sie dieses Bauteil ansteuern und dieses Bauteil in eine Funktion setzen. Beispielsweise kann eine lokale Lärmentstehung erfolgen, in dem das weitere Bauteil ein Lautsprecher ist, der von der Software mit maximaler Lautstärke angesteuert wird. Dies kann beispielsweise einen lokalen Täter abschrecken.

Bei der erfindungsgemäßen Anordnung ist es also möglich, allein durch Trennen z.B. des Lautsprechers vom Datengerät einen Alarmzustand auszulösen. Dieses Trennen des Lautsprechers vom Datengerät kann beispielsweise durch Herausziehen eines Kopfhörerkabels aus einem Mobiltelefon erfolgen, schnell und unauffällig. Die dadurch eintretende Alarmierung ist ohne das Führen eines Telefonates und ohne vorheriges Entsperren des Datengerätes möglich. Hilfe kann schnell herbeigerufen werden.

Nach der Erfindung ist das verknüpfte Bauteil eine drahtlose Sendeeinheit des Datengerätes. Die drahtlose Sendeeinheit kann beispielsweise ein GSM-Modul sein, das Telefonate führen kann oder auch Nachrichten versenden kann. Möglicherweise kann die drahtlose Sendeeinheit aber auch durch eine Software ausgebildet sein, wie beispielswiese eine Messenger-Software.

Insbesondere dann, wenn in der drahtlosen Sendeeinheit Informationen über Datenverbindungen zu Dritten hinterlegt sind, können diese Informationen in der drahtlosen Sendeeinheit bei Vorliegen des Alarmfalles dazu genutzt werden, Nachrichten zu versenden. Es können bereits Nachrichten vorbereitet sein, die an Dritte, wie beispielsweise an Freunde des das Datengerät Benutzenden oder auch an Ordnungsorgane wie die Polizei senden. Möglich ist aber auch die Einschaltung des mobilen Datengerätes mit Mikrofon und/oder Kamera, um dabei festgestellte Daten zu übertragen. Bei der Übertragung der Daten können weitere Informationen des Datengerätes wie beispielsweise die geographischen Koordinaten der Anordnung des Datengerätes übertragen werden, so dass Hilfe von Dritten gezielt an den Ort verbracht werden kann.

Nach der Erfindung ist vorgesehen, dass in der drahtlosen Sendeeinheit Informationen über eine Datenverbindung zu einem zentralen Server hinterlegt sind. Mit der erfindungsgemäßen Anordnung kann nach dieser Weiterbildung nicht nur eine Alarmierung vor Ort erfolgen, es ist auch nicht vorgesehen, mit dem mobilen Datengerät nur einen Dritten zu informieren. Vielmehr schlägt die Erfindung vor, eine Verbindung zu einem zentralen Server aufzubauen. Informationen für diese Datenverbindung sind in der drahtlosen Sendeeinheit hinterlegt. Mit einem Server ist dann eine Verarbeitung der eingegangenen Daten möglich.

So sieht die Erfindung vor, dass im Server eine Einrichtung zum Vervielfältigen der eingegangenen Daten und zum Senden der vervielfältigten Daten an andere Datengeräte dritter Personen oder Institutionen angeordnet ist. Die eingegangenen Daten können beispielsweise die Uhrzeit, GPS-Raumkoordinaten umfassen. Diese Daten werden vervielfältigt und an Dritte versendet. Diese dritten Personen können vorher hinterlegt werden, Namen und Adressen von Bekannten der das mobile Datengerät benutzenden Person oder auch Behörden und Rettungskräfte umfassen.

Nach einer ersten Alternative der erfindungsgemäßen Anordnung sind die von der Schnittstelle ausgehenden physikalischen Signale elektrische Spannungsänderungen. Wird beispielsweise der Kopfhörerstecker aus dem Datengerät herausgezogen, so endet die Versorgung des Kopfhörers mit elektrischen Spannungen zum Wiedergeben von Audiodaten. Diese Spannungsänderungen werden von der Software aufgenommen und in ein Vorliegen des Alarmzustandes umgesetzt. Das weitere Bauteil des Datengerätes wird angesteuert. Alternativ zur elektrischen Spannungsänderungen können auch elektrische Widerstands-änderungen und/oder elektrische Stromstärkeänderungen an der Schnittstelle detektierbar sein.

Die Schnittstelle für die Daten kann durch zumindest eine Buchse im Datengerät ausgebildet sein, dem Kopfhörer kann dann ein Stecker zugeordnet sein, der in die Buchse einsteckbar ist. Die Schnittstelle kann aber auch durch eine drahtlose Verbindung ausgebildet sein, wie beispielswiese eine Bluetoothverbindung. Auch bei dem Abbrechen einer Bluetoothverbindung gibt es zum Beispiel auf der Betriebssystemebene Spannungs- oder Stromstärkenänderungen, die von der auf dem erfindungsgemäßen Datengerät angeordneten Software registrierbar sind.

Wie bereits oben angeführt kann das verknüpfte Bauteil ein Lautsprecher sein, insbesondere ein in das Datengerät eingebauter Lautsprecher. Dieser kann von der Software auf dem Datengerät mit der erfindungsgemäßen Anordnung mit maximaler Lautstärke angesteuert werden, um Aufmerksamkeit zu erregen.
Eine nächste Weiterbildung der Erfindung sieht noch vor, dass innerhalb des Servers eine von mobilen Endgeräten unabhängige Countdown-Einrichtung angeordnet ist, die nach einem Zeitablauf und Ausbleiben eines Deaktivierungssignals vom Server bereits gesammelte Daten an vordefinierte Datengeräte sendet. Durch die Countdown-Einrichtung kann verhindert werden, dass unabsichtliche Fehlalarme sofort eine Datenkette in Gang setzen. Liegt aber ein Alarmfall vor, werden Daten zu diesem Alarmfall allein vom Server an Dritte gesendet.

Ausführungsbeispiele der erfindungsgemäßen Anordnung sind in der Zeichnung dargestellt. Es zeigen:

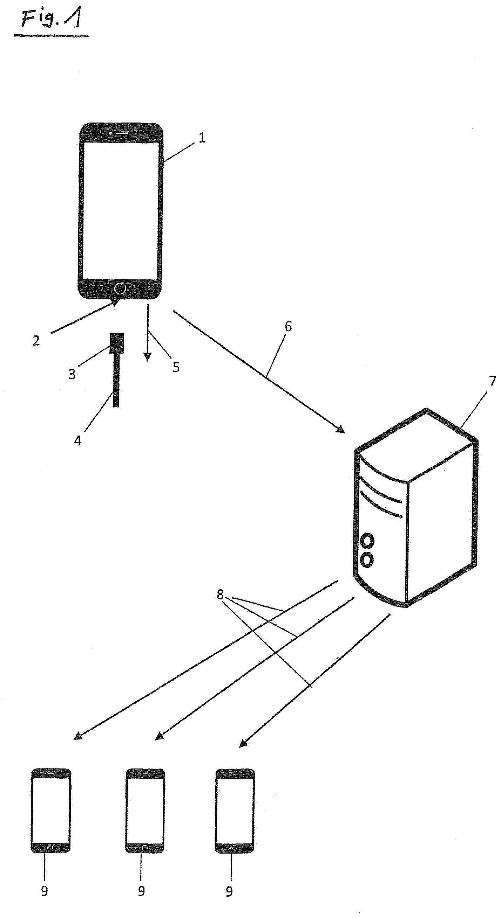

- Figur 1:: eine schematische Darstellung eines Alarmfalls unter Verwendung einer erfindungsgemäßen Anordnung und
- Figur 2:: eine weitere schematische Darstellung eines Alarmfalls unter Verwendung einer abgewandelten erfindungsgemäßen Anordnung.

Die erfindungsgemäße Anordnung umfasst ein mobiles Datengerät 1, das in dem Ausführungsbeispiel als Mobiltelefon ausgebildet ist. Auf diesem mobilen Datengerät 1 befindet sich ein Betriebssystem sowie eine Software, die einen Zugriff auf eine nicht weiter dargestellte Schnittstelle 2 des mobilen Datengerätes 1 hat. Diese Software kann bei einem Mobiltelefon als mobiles Datengerät 1 beispielsweise als sogenannte App vorliegen.

An die Schnittstelle 2 ist der Stecker 3 am freien Ende eines Kabels 4 für einen Lautsprecher anschließbar. Die Schnittstelle 2 kann dazu als Buchse ausgebildet sein, alternativ kann aber auch eine drahtlose Verbindung zwischen Schnittstelle 2 des mobilen Datengerätes 1 und dem nicht weiter dargestellten Kopfhörer vorgesehen sein.

In einem Alarmfall wird das Kabel 4 mit dem Stecker 3 von dem mobilen Datengerät 1 entfernt, wie mit Pfeil 5 angedeutet. In diesem Fall wird von einer Sendeeinheit des mobilen Datengerätes 1 eine Information entlang Pfeil 6 an einen zentralen Server 7 gesandt. Dieser Server 7 kann die eingegangene Nachricht vervielfältigen und entlang der Pfeile 8 an andere Datengeräte 9 dritter Personen oder Institutionen senden. Diese dritten Personen können dann Hilfe organisieren oder Hilfe leisten.

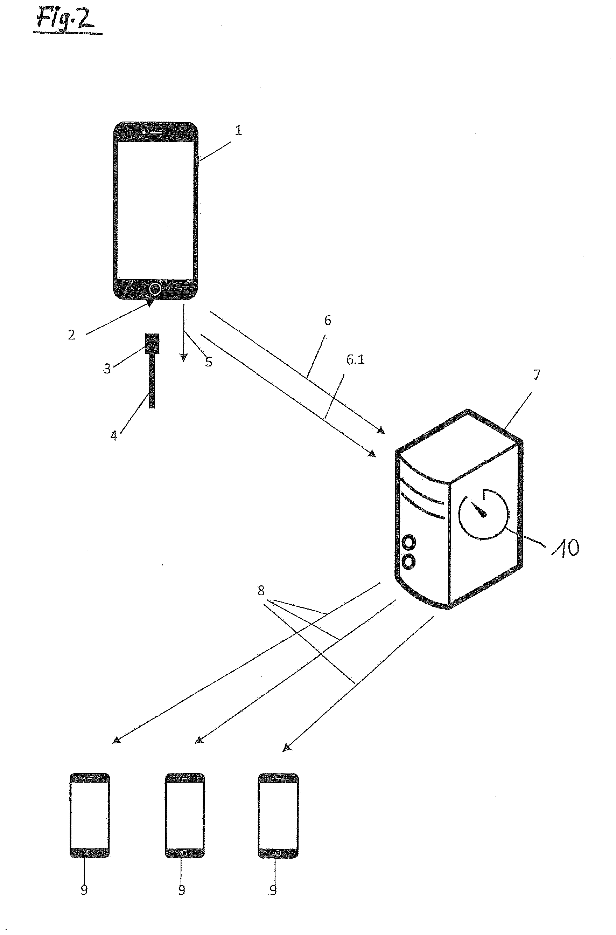

Auch bei der Anordnung nach Figur 2 wird ein Server 7 verwendet. Dieser Server 7 ist zusätzlich mit einer Countdown-Einrichtung 10 ausgerüstet. Gehen Daten zu einem Alarmfall ein, wird die Countdown-Einrichtung 10 in Gang gesetzt. Sie wartet eine definierte Zeitspanne ab, ob von dem mobilen Datengerät 1 noch ein Deaktivierungssignal entlang Pfeil 6.1 eingeht. Ist dies nicht der Fall, werden wieder bis dahin im Server 7 gesammelte Daten vom Server 7 entlang der Pfeile 8 zu anderen Datengeräten 9 gesendet. Diese Weitergabe von Daten entlang der Pfeile 8 kann beispielsweise durch Anrufe im Auto, SMS, E-Mail, Push-Nachrichten oder dergleichen erfolgen.

## Patentansprüche

1. Anordnung zum Auslösen zumindest einer Alarmierung, umfassend zumindest ein mobiles Datengerät (1) mit einer Schnittstelle (2) zum Übertragen von Daten
und/oder elektrische Strömen an wenigstens ein anderes Datengerät (9), und umfassend zumindest ein mit der Schnittstelle (2) verknüpftes Gerät, wobei auf dem Datengerät (1) eine Software gespeichert ist, die einen Zugriff auf von der Schnittstelle (2) bei einem Trennen des Gerätes von der Schnittstelle (2) ausgehende physikalische Signale hat und die mit zumindest einem weiteren Bauteil des Datengerätes (1) verknüpft ist, und umfassend einen zentralen Server (7),
**dadurch gekennzeichnet,**
**dass** das weitere verknüpfte Bauteil eine drahtlose Sendeeinheit des Datengerätes (1) ist, dass in der drahtlosen Sendeeinheit Informationen über eine Datenverbindung zu dem zentralen Server (7) hinterlegt sind und dass im Server (7) eine Einrichtung zum Vervielfältigen der eingegangenen Daten und zum Senden der vervielfältigten Daten an andere Datengeräte (9) dritter Personen oder Institutionen angeordnet ist.

2. Anordnung nach Anspruch 1, **dadurch gekennzeichnet, dass** das Gerät ein Lautsprecher ist und dass die übertragenden Daten Audiodaten sind.

3. Anordnung nach Anspruch 1 oder 2, **dadurch gekennzeichnet, dass** die von der Schnittstelle (2) ausgehenden physikalischen Signale auftretende elektrische Spannungsänderungen sind.

4. Anordnung nach Anspruch 1 oder 2, **dadurch gekennzeichnet, dass** die von der Schnittstelle (2) ausgehenden physikalischen Signale auftretende elektrische Widerstandsänderungen sind.

5. Anordnung nach Anspruch 1 oder 2, **dadurch gekennzeichnet, dass** die von der Schnittstelle (2) ausgehenden physikalischen Signale auftretende elektrische Stromstärkeänderungen sind.

6. Anordnung nach einem der vorhergehenden Ansprüche, **dadurch gekennzeichnet, dass** die Schnittstelle durch zumindest eine Buchse im Datengerät (1) zum Anschließen zumindest eines Steckers (3) ausgebildet ist.

7. Anordnung nach einem der Ansprüche 1 bis 5, **dadurch gekennzeichnet, dass** die Schnittstelle (2) durch eine drahtlose Verbindung ausgebildet ist.

8. Anordnung nach einem der vorhergehenden Ansprüche, **dadurch gekennzeichnet, dass** das verknüpfte Bauteil ein Lautsprecher ist, insbesondere ein in das Datengerät (1) eingebauter Lautsprecher ist.

9. Anordnung nach einem der vorhergehenden Ansprüche, **dadurch gekennzeichnet, dass** in der drahtlosen Sendeeinheit die Informationen über Datenverbindungen zu Dritten hinterlegt sind.

10. Anordnung nach einem der vorhergehenden Ansprüche, **dadurch gekennzeichnet, dass** innerhalb des Servers (7) eine von mobilen Datengeräten (1,9) unabhängige Countdown-Einrichtung (10) angeordnet ist, die nach einem Zeitablauf und bei Ausbleiben eines Deaktivierungssignals vom Server (7) bereits gesammelte Daten an vordefinierte Datengeräte (9) sendet.

## Claims

1. An arrangement for triggering at least one alarm, comprising at least at least one mobile data device (1) with an interface (2) for transmitting data and/or electrical currents to at least one other data device (9), and comprising at least one device linked to the interface (2), wherein software is stored on the data device (1), which software has access to physical signals emanating from the interface (2) when the device is disconnected from the interface (2) and which is linked to at least one further component of the data device (1), and comprising a central server (7),
**characterized in**
**that** the further linked component is a wireless transmission unit of the data device (1), that information on a data connection to the central server (7) is stored in the wireless transmission unit and that a mechanism for duplicating the received data and for sending the duplicated data to other data devices (9) of third-party persons or institutions is arranged in the server (7) .

2. The arrangement according to claim 1, **characterized in that** the device is a loudspeaker and the transmitted data is audio data.

3. The arrangement according to claim 1 or 2, **characterized in that** the physical signals emanating from the interface (2) are occurring electrical voltage changes.

4. The arrangement according to claim 1 or 2, **characterized in that** the physical signals emanating from the interface (2) are occurring electrical resistance changes.

5. The arrangement according to claim 1 or 2, **characterized in that** the physical signals emanating from the interface (2) are occurring electrical current strength changes.

6. The arrangement according to any one of the preceding claims, **characterized in that** the interface is configured by at least one socket in the mobile data device (1) for connecting at least one plug (3).

7. The arrangement according to any one of claims 1 to 5, **characterized in that** the interface (2) is configured by a wireless connection.

8. The arrangement according to any one of the preceding claims, **characterized in that** the linked component is a loudspeaker, in particular a loudspeaker installed in the data device (1).

9. The arrangement according to any one of the preceding claims, **characterized in that** the information on data connections to third parties is stored in the wireless transmission unit.

10. The arrangement according to any one of the preceding claims, **characterized in that** within the server (7), a countdown mechanism (10) independent of mobile end devices (1, 9) is arranged which sends data already collected by the server (7) to predefined data devices (9) after a lapse of time and upon absence of a deactivation signal.

## Revendications

1. Dispositif de déclenchement d'au moins une alarme, comprenant au moins un appareil de données (1) mobile avec une interface (2) pour transmettre des données et/ou des courants électriques à au moins un autre appareil de données (9) et comprenant au moins un appareil relié à l'interface (2), sachant que sur l'appareil de données (1) est mémorisé un logiciel, qui a un accès aux signaux physiques partant de l'interface (2) lors d'une séparation de l'appareil de l'interface (2) et qui est relié à au moins un autre composant de l'appareil de données (1) et comprenant un serveur central (7),
**caractérisé en ce**
**que** l'autre composant relié est une unité émettrice sans fil de l'appareil de données (1), **en ce que** dans l'unité émettrice sans fil sont enregistrées des informations par une liaison de données au serveur central (7) et **en ce que** dans le serveur (7) est disposé un dispositif destiné à reproduire les données arrivées et à envoyer les données reproduites à d'autres appareils de données (9) de tierces personnes ou institutions.

2. Dispositif selon la revendication 1, **caractérisé en ce que** l'appareil est un haut-parleur et **en ce que** les données à transmettre sont des données audio.

3. Dispositif selon la revendication 1 ou 2, **caractérisé en ce que** les signaux physiques partant de l'interface (2) sont des variations de tension électriques se produisant.

4. Dispositif selon la revendication 1 ou 2, **caractérisé en ce que** les signaux physiques partant de l'interface (2) sont des variations de résistance électriques se produisant.

5. Dispositif selon la revendication 1 ou 2, **caractérisé en ce que** les signaux physiques partant de l'interface (2) sont des variations d'intensité de courant électriques se produisant.

6. Dispositif selon l'une quelconque des revendications précédentes, **caractérisé en ce que** l'interface est constituée par au moins une prise dans l'appareil de données (1) pour raccordement d'au moins un connecteur (3) .

7. Dispositif selon l'une quelconque des revendications 1 à 5, **caractérisé en ce que** l'interface (2) est constituée par une liaison sans fil.

8. Dispositif selon l'une quelconque des revendications précédentes, **caractérisé en ce que** le composant relié est un haut-parleur, en particulier un haut-parleur incorporé dans l'appareil de données (1).

9. Dispositif selon l'une quelconque des revendications précédentes, **caractérisé en ce que** dans l'unité émettrice sans fil, les informations sont enregistrées par des liaisons de données avec des tiers.

10. Dispositif selon l'une quelconque des revendications précédentes, **caractérisé en ce qu'**à l'intérieur du serveur (7) est disposé un système de décompte (10) indépendant des appareils de données mobiles (1, 9), qui envoie à des appareils de données prédéfinis (9) les données déjà collectées par le serveur (7) après une expiration de temps et en cas de défaut d'un signal de désactivation.
